(19) Europäisches Patentamt
European Patent Office
Office européen des brevets

(11) **EP 2 574 547 B1**

(12) **FASCICULE DE BREVET EUROPEEN**

(45) Date de publication et mention
de la délivrance du brevet:
**19.11.2014 Bulletin 2014/47**

(51) Int Cl.:
***B64C 27/26*** *(2006.01)*     ***B64C 27/22*** *(2006.01)*

(21) Numéro de dépôt: **12006506.5**

(22) Date de dépôt: **17.09.2012**

(54) **Procédé de régulation de la vitesse de propulsion d'un hélicoptère hybride**

Regulierungsverfahren der Antriebsgeschwindigkeit eines Hybridhelikopters

Method for controlling the propulsion speed of a hybrid helicopter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2011 FR 1102925**

(43) Date de publication de la demande:
**03.04.2013 Bulletin 2013/14**

(73) Titulaire: **Airbus Helicopters**
**13725 Marignane Cedex (FR)**

(72) Inventeur: **Eglin, Paul**
**13830 Roquefort La Bedoule (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 258 615**     **FR-A1- 2 916 421**
**FR-A1- 2 946 315**

EP 2 574 547 B1

**Description**

La présente invention est du domaine des giravions, et plus particulièrement des hélicoptères hybrides comportant au moins un rotor principal de sustentation, voire aussi de propulsion, et au moins une hélice propulsive. La présente invention relève plus particulièrement des moyens automatisés générateurs d'ordres de pilotage équipant les hélicoptères hybrides, qui procurent au moins une fonction de régulation de leur propulsion. La présente invention a pour objet un procédé de commande générant une régulation motrice d'un hélicoptère hybride, notamment au regard de la tenue de vitesse de propulsion.

Parmi les giravions, on désigne par hélicoptère hybride un aéronef qui comporte au moins un rotor principal et au moins une hélice propulsive. Un tel hélicoptère hybride est réputé comme étant un hélicoptère rapide à long rayon d'action, dans lequel au moins une hélice propulsive procure une propulsion de l'hélicoptère en translation.

Le rotor principal est un rotor à axe sensiblement vertical qui procure la sustentation du giravion, voire encore marginalement sa propulsion. L'hélice propulsive est un rotor à axe horizontal qui procure la propulsion du giravion. Les axes de rotation respectifs du rotor principal et de l'hélice propulsive sont sensiblement orthogonaux entre eux. Les orientations verticales et horizontales sont à considérer par rapport à l'orientation générale du giravion, l'axe horizontal s'étendant entre l'avant et l'arrière du giravion au regard de son sens de progression. L'hélicoptère hybride est susceptible de comporter une hélice propulsive unique, ou d'être équipé de plusieurs hélices propulsives qui sont latéralement réparties de part et d'autre de l'hélicoptère hybride.

Le rotor principal et l'hélice propulsive comprennent chacun un ensemble de pales entraînées en rotation par un organe moteur, turbomoteur notamment. L'organe moteur est couramment commun à l'entraînement en rotation du rotor principal et de l'hélice propulsive. Le rotor principal est prioritairement entraîné en rotation par l'organe moteur, le reliquat de puissance fournie par l'organe moteur étant une puissance disponible pour l'entraînement en rotation de l'hélice propulsive. Il est envisageable d'affecter des organes moteurs respectivement au rotor principal et à l'hélice propulsive, mais une telle solution n'est pas souhaitable, quoique susceptible d'être appliquée à la présente invention, en raison de l'alourdissement de l'hélicoptère hybride qui est induit.

Il se pose un problème de régulation de la vitesse de propulsion de l'hélicoptère hybride. Il a été plus particulièrement développé par le document FR2946315 (EUROCOPTER), des difficultés à surmonter pour commander la mise en oeuvre d'une hélice propulsive équipant un hélicoptère hybride.

Pour faire varier la vitesse de propulsion de l'hélicoptère hybride, une variation du pas moyen des pales de l'hélice propulsive est placée sous la dépendance de moyens de commande automatisés, qui sont mis en oeuvre à partir d'un organe de commande. L'organe de commande est un organe manuel de commande qui est notamment entraîné par l'homme pour sa manoeuvre, en étant par exemple agencé en organe de commande couramment désigné par l'homme de métier bouton « sapin » ou « beep trim ». L'organe de commande est notamment un organe d'émission d'une consigne de variation de poussée. La notion de manuel est à comprendre par distinction d'un organe de commande automatisé. Le pilote de l'hélicoptère hybride exploite l'organe manuel de commande pour émettre des ordres de pilotage relatifs à la poussée souhaitée que doit fournir l'hélice propulsive. Les moyens de commande sont des moyens de calcul qui élaborent une consigne de pas moyen des pales de l'hélice propulsive à partir des ordres de pilotage émis, et qui génèrent des ordres de commande correspondants à ladite consigne pour réguler le pas des pales de l'hélice propulsive. La régulation du pas des pales de l'hélice propulsive doit prendre en compte diverses contraintes de fonctionnement de l'hélicoptère hybride, notamment des contraintes liées à la sécurisation de son fonctionnement.

Par exemple, les moyens de commande doivent prendre en compte un éventuel ordre de pilotage intempestif, ou une commande de variation de pas générée volontairement par le pilote mais excessive. Par exemple encore, en cas de perte de vitesse de l'hélicoptère hybride telle qu'induite par une prise d'assiette à cabrer, l'incidence aérodynamique des pales augmente en l'absence d'une correction du pas des pales par le pilote. Une augmentation de l'incidence aérodynamique des pales induit une augmentation de la puissance consommée par l'hélice propulsive, au risque de dépasser la capacité de l'organe moteur exploité pour son entraînement en rotation.

Il doit aussi être pris en compte les capacités de résistance de l'hélicoptère hybride au regard d'une requête de commande de vol en propulsion excessive qui serait susceptible de l'endommager. Une telle capacité de résistance est notamment à considérer non seulement au regard de la résistance et de la puissance nominale de l'organe moteur exploité pour la motorisation de l'hélice propulsive, mais aussi au regard de l'ensemble des organes que comprend la chaîne cinématique reliant l'organe moteur à l'hélice propulsive.

Pour protéger l'hélicoptère hybride, le document FR2946315 propose divers modes de commande de la mise en oeuvre de l'hélice propulsive, qui permettent d'ajuster le pas des pales selon la vitesse de déplacement de l'hélicoptère hybride. Un tel ajustement permet d'éviter toute divergence entre la puissance requise par l'hélice propulsive et les capacités de résistance de l'hélicoptère hybride au regard d'une telle puissance requise. Plus particulièrement, le document FR2946315 propose de réguler le fonctionnement de l'hélice propulsive à partir des modes de fonctionnement des moyens de commande suivants :

*) un mode direct, dans lequel la valeur du pas moyen des pales de l'hélice propulsive est élaborée par les moyens de commande directement à partir d'un ordre de pilotage relatif à une variation de poussée. L'ordre de commande correspond à une consigne de pas moyen des pales qui est générée par les moyens de commande directement à partir d'un ordre de pilotage, pour accroître la vitesse de propulsion fournie par l'hélice propulsive.

*) un mode forcé, qui est mis en oeuvre à partir d'une mise en autorotation du rotor principal. En mode forcé, l'ordre de commande est issu d'une valeur calculée par les moyens de commande et correspond à une consigne de pas moyen des pales, qui est forcée sur requête émise par le pilote au moyen de l'organe manuel de commande.

*) un mode régulé, dans lequel la puissance consommée par l'hélice propulsive est régulée par les moyens de commande. En mode régulé, les moyens de commande génèrent des ordres de commande en fonction d'une consigne de puissance qui est issue d'un ordre de pilotage relatif à une variation de poussée. L'ordre de pilotage est émis par le pilote au moyen de l'organe manuel de commande, et est traité par les moyens de commande pour réguler la puissance consommée par l'hélice propulsive.

*) un mode protégé, qui est mis en oeuvre pour chacun des autres modes, hormis le mode forcé. En mode protégé, les ordres de commande générés par les moyens de commande sont soumis à des conditions de sécurité. Les consignes de pas moyen des pales sont élaborées par les moyens de commande à partir d'un ordre de pilotage indifféremment émis en mode direct ou en mode régulé, sous condition que des paramètres déterminés de limitation de la puissance consommée par l'hélice propulsive a atteint voire dépassé une limite tolérée.

Le mode protégé est spontanément mis en oeuvre par les moyens de commande pour protéger l'hélicoptère hybride d'un éventuel endommagement, et plus particulièrement pour préserver l'organe moteur et/ou les divers organes composant la chaîne cinématique reliant l'organe moteur à l'hélice propulsive. A partir d'un ordre de pilotage émis par le pilote au moyen de l'organe manuel de commande, les moyens de commande génèrent automatiquement un ordre de commande relatif à une consigne de pas moyen, qui est établi selon des paramètres déterminés relatifs aux capacités de résistance de l'hélicoptère hybride. En mode protégé, les moyens de commande diminuent au besoin automatiquement la consigne de pas moyen des pales préalablement déterminée à partir de l'ordre de pilotage relatif à une requête en variation de poussée émise en mode direct, et/ou relatif à une consigne de puissance émise par les moyens de commande en mode régulée.

Il est en conséquence distingué deux processus de pilotage en propulsion de l'hélicoptère hybride, en fonction des modalités d'intervention des moyens de commande. Quel que soit le processus mis en oeuvre, la puissance consommée est contrôlée en permanence par des règles de protection du fonctionnement de l'hélicoptère hybride, pour permettre aux moyens de commande d'intervenir selon l'un et/ou l'autre des modes de fonctionnement.

Selon un processus piloté, la consigne de pas moyen des pales de l'hélice propulsive est élaborée par les moyens de commande à partir d'un ordre de pilotage directement issu d'une manoeuvre par le pilote de l'organe manuel de commande. Le processus piloté permet, à partir d'une commande de vol opérée par le pilote, de faire dérouler le pas des pales de l'hélice propulsive à un rythme constant pour contrôler les accélérations de l'hélicoptère hybride.

Selon un processus correctif destiné à protéger l'hélicoptère hybride, la consigne de pas moyen des pales de l'hélice propulsive est élaborée par les moyens de commande à partir d'un ordre de pilotage qui est issu d'une manoeuvre par le pilote de l'organe manuel de commande, et qui est automatiquement corrigé par les moyens de commande en fonction de la puissance consommée par l'hélice propulsive. Les ordres de commande sont spontanément adaptés en fonction des contraintes liées au fonctionnement protégé de l'hélicoptère hybride. Le processus correctif est mis en oeuvre de sorte qu'à basse puissance consommée le pas des pales de l'hélice propulsive reste figé, et qu'à forte puissance consommée le pas des pales de l'hélice propulsive soit géré à partir d'une loi de commande qui tend à maintenir constante la puissance consommée.

Il est apparu que de telles dispositions pouvaient être perfectionnées. Notamment, la vitesse de progression de l'hélicoptère hybride est gérée par les moyens de commande indépendamment d'une variation de l'assiette de tangage de l'hélicoptère hybride. Une régulation entre la vitesse et le pas des pales de l'hélice propulsive serait une solution possible, mais se pose alors une contrainte de sécurité de fonctionnement de l'hélicoptère hybride. Une telle solution de régulation est notamment susceptible d'induire un dépassement de limite admise de la puissance de l'organe moteur entraînant l'hélice propulsive.

Selon le document FR2946315, la tenue de vitesse est procurée à partir d'une augmentation du pas des pales de l'hélice propulsive. Dans ce contexte, il est à veiller qu'un perfectionnement des modalités de mise en oeuvre des moyens de commande prenne en compte une interdiction d'un risque d'endommagement ou de dysfonctionnement de l'hélicoptère hybride. Plus particulièrement, il est à veiller qu'un ordre de pilotage relatif à une variation de pas des pales ou relatif à une poussée à exercer par l'hélice propulsive, n'induise pas un risque de dépassement d'une vitesse air maximale autorisée ou des limites de sécurité de fonctionnement de l'hélicoptère hybride.

Le but de la présente invention est de proposer un procédé de commande procurant une régulation de la tenue de vitesse de propulsion d'un hélicoptère hybride. Un tel procédé de commande vise notamment à améliorer l'interface entre le pilote et les moyens de commande, notamment au regard des conditions de vol sécurisé de l'hélicoptère hybride.

Il est plus particulièrement visé par la présente invention de perfectionner le système de commande faisant l'objet du document FR2946315, pour améliorer l'ergonomie entre le pilote et les moyens de commande au regard d'une telle tenue de vitesse de propulsion. Cette amélioration est recherchée sans perdre de vue une interdiction de tout risque d'endommagement de l'hélicoptère hybride.

Il est notamment recherché de proposer des dispositions propres à la tenue de vitesse de propulsion, dans le cadre de contraintes liées à la sécurité de fonctionnement de l'hélicoptère hybride et développées dans le document FR2946315. Le perfectionnement recherché vise plus spécifiquement à améliorer l'assistance que procure les moyens de commande pour le pilote au regard du pilotage relatif à la propulsion de l'hélicoptère hybride, dans des conditions optimisées de sécurité.

Le procédé de commande de la présente invention est un procédé de régulation de la vitesse de propulsion d'un hélicoptère hybride. L'hélicoptère hybride est un giravion qui comprend au moins un rotor principal de sustentation, voire aussi de propulsion, et au moins une hélice propulsive dotée d'un ensemble de pales à pas variable. Le nombre d'hélices propulsives que comprend l'hélicoptère hybride est indifférent, mais le procédé de commande de la présente invention est notamment adapté pour un hélicoptère hybride comportant plusieurs hélices propulsives, et notamment un couple d'hélices propulsives qui sont latéralement réparties de part et d'autre de l'hélicoptère hybride. Le rotor principal et la ou les hélices propulsives sont indépendamment entraînés en rotation par au moins un organe moteur équipant l'hélicoptère hybride. L'organe moteur est de préférence commun à l'entraînement du rotor principal et de la ou des hélices propulsives, le rotor principal étant prioritairement entraîné en rotation par l'organe moteur. Le reliquat de puissance fournie par l'organe moteur est une puissance disponible pour l'entraînement indépendant en rotation de la ou des hélices propulsives.

Le procédé de régulation de la présente invention met en oeuvre des moyens de commande qui élaborent des ordres de commande relatifs à une consigne de variation de pas moyen des pales de l'hélice propulsive au moins, sinon de chacune des hélices propulsives dans le cas d'application du procédé à un hélicoptère hybride équipé d'une pluralité d'hélices propulsives. A partir de la consigne de variation de pas, les moyens de commande génèrent les ordres de commande provoquant une variation de pas moyen des pales de la ou des hélices propulsives.

Les consignes de variation de pas régulent la vitesse de propulsion de l'hélicoptère hybride, en fonction d'un ordre de pilotage qui est généré par le pilote de l'hélicoptère hybride au moyen d'au moins un organe manuel de commande. Un tel organe manuel est un organe de commande entraîné par l'homme permettant au pilote de l'hélicoptère hybride d'ordonner une variation de poussée que procure l'hélice propulsive, voire le cas échéant que procurent l'une et/ou l'autre des hélices propulsives équipant l'hélicoptère hybride. L'organe manuel de commande émet un ordre de pilotage qui est transmis aux moyens de commande pour générer les ordres de commande correspondant. Les moyens de commande sont aussi aptes à élaborer la consigne de variation de pas en fonction de la puissance consommée par l'hélice propulsive, ou le cas échéant par chacune des hélices propulsives équipant l'hélicoptère hybride.

Le procédé de régulation de la présente invention comprend divers processus de pilotage, dont un processus piloté et un processus correctif. Selon le processus piloté, des ordres de commande correspondants à la consigne de pas sont élaborés par les moyens de commande à partir d'ordres de pilotage d'une variation de pas des dites pales qui sont générés par l'organe manuel de commande. Selon le processus correctif, des ordres de commande correspondants à la consigne de pas sont élaborés par les moyens de commande à partir d'ordres corrigés de pilotage d'une variation de pas des dites pales, qui sont générés à partir d'un ordre de pilotage corrigé par les moyens de commande au regard d'au moins un paramètre de régulation limitant. Le paramètre de régulation limitant est un paramètre prédéterminé qui est relatif à la capacité connue de résistance de l'hélicoptère hybride au regard de son fonctionnement général et/ou des divers organes dont il est équipé.

Selon une approche de la présente invention, les différents processus de pilotage sont plus spécifiquement à considérer au regard de la mise en oeuvre propre de divers modes de fonctionnement de l'appareillage de commande de l'hélice propulsive. De tels modes de fonctionnement et appareillage de commande exploitent les moyens de commande pour générer les ordres de commande, et relèvent notamment de ceux relatifs au procédé de commande pour giravion faisant l'objet du document FR2946315. Plus particulièrement, le processus piloté est activé en dit mode direct, et le processus correctif est en cas de besoin activé par les moyens de commande en dit mode direct et en dit mode régulé pour protéger l'hélicoptère hybride.

Selon la présente invention, le procédé de régulation est principalement reconnaissable en ce que les ordres de pilotage sont relatifs à une consigne de vitesse air. La vitesse air considérée est indifféremment une vitesse air vraie ou une vitesse air indiquée. La vitesse air vraie correspond communément à la vitesse de l'hélicoptère par rapport à l'air, prenant en compte la densité de l'air environnant l'hélicoptère par rapport à la densité de l'air au niveau de la mer. La vitesse air indiquée correspond à la vitesse de l'hélicoptère qui est évaluée par un instrument de mesure embarqué, et qui est corrigée des effets de la compressibilité en conditions atmosphériques standard au niveau de la mer.

A partir de telles consignes de vitesse air, le processus correctif est mis en oeuvre selon au moins un premier mode de correction. Conformément à un tel premier mode de correction, les ordres corrigés de pilotage sont issus d'ordres de pilotage qui sont corrigés selon une première loi prenant en compte une puissance consommée de consigne correspondante à la consigne de vitesse air issue de l'ordre de pilotage.

Plus particulièrement, ladite première loi est fondée sur la règle suivante, à partir d'une consigne de vitesse air générée par l'organe manuel de commande :

$$\beta_{prop} = kp_2\,(P\text{-}P^*) + ki_2 \int (P\text{-}P^*).dt$$

Selon cette première loi, $\beta_{prop}$ correspond au pas moyen des pales de chaque hélice propulsive, $P$ à la puissance consommée, $P^*$ à la puissance consommée de consigne, et $kp_2$ et $ki_2$ à des paramètres constants de régulation prédéterminés par modélisation.

Il est de préférence proposé un procédé prenant en compte divers modes de correction selon la puissance consommée par l'hélice propulsive. Les modalités de mise en oeuvre du processus correctif sont diversifiées, à partir d'une détermination de la puissance consommée de l'hélice propulsive qui est sélectivement considérée à basse puissance consommée et à forte puissance consommée.

Les notions de basse puissance et de forte puissance sont à considérer au regard de valeurs relatives, la basse puissance étant d'une valeur inférieure à une valeur de forte puissance. Les notions de basse puissance et de forte puissance sont notamment à évaluer au regard des vitesses de progression du giravion, et plus particulièrement au regard des états de vol du giravion pour lesquels des besoins en puissance du giravion sont respectivement définis.

Dans ce contexte, de tels besoins sont susceptibles de varier et d'être définis selon la structure propre du giravion et le cas échéant selon la masse globale du giravion incluant d'éventuels emports, et plus particulièrement selon les capacités propres du giravion de développement et de consommation de puissance en fonction des besoins du giravion pour une situation de vol donnée, et plus particulièrement au regard des dits états de vol du giravion et des phases transitoires entre de tels états de vol.

Il est notamment à considérer différents états de vol du giravion communément admis, tels que des états de vol stationnaire et/ou à basses vitesses, un état de vol de croisière voire encore un état de vol transitoire entre de dits états de vol stationnaire et/ou à basses vitesses et un dit état de vol de croisière. En état de vol stationnaire, la vitesse de progression du giravion peut être estimée de l'ordre inférieure à 40 kt, voire inférieure à 20 kt ; En état de vol à basses vitesses, la vitesse de progression du giravion peut être estimée de l'ordre inférieure à 120 kt, voire inférieure à 150 kt. En état de vol stationnaire et/ou à basses vitesses, il est à considérer des basses puissances consommées. En état de vol transitoire et en état de vol de croisière, à des vitesses du giravion pouvant être estimées supérieures à 120 kt voire à 150 kt, il est à considérer des fortes puissances consommées.

Pour illustrer la distinction faite entre les notions de basses puissances et de fortes puissances, il a été constaté par essais pour un giravion de structure donnée, un seuil de séparation entre la notion de basse puissance et la notion de forte puissance. Un tel seuil de séparation a été évalué dans le cadre de ces essais de l'ordre compris entre 15% et 25% de la puissance disponible de l'organe moteur pour l'entraînement de l'hélice propulsive, ou le cas échéant des diverses hélices propulsives équipant l'hélicoptère hybride. Un tel constat issu d'essais est donné à titre indicatif.

Plus particulièrement, le premier mode de correction est mis en oeuvre à forte puissance consommée. A basse puissance consommée, le processus correctif est mis en oeuvre à partir de dites consignes de vitesse air selon au moins un deuxième mode de correction selon lequel les ordres corrigés de pilotage sont issus d'ordres de pilotage qui sont corrigés selon une deuxième loi prenant directement en compte ladite consigne de vitesse air issue de l'ordre de pilotage.

Plus particulièrement, ladite deuxième loi est fondée sur la règle suivante, à partir d'une consigne de vitesse air générée par l'organe manuel de commande :

$$\beta_{prop} = kp_1\,(TAS\text{-}TAS^*) + ki_1 \int (TAS\text{-}TAS^*).dt$$

Selon cette deuxième loi, $\beta_{prop}$ correspond au pas moyen des pales de chaque hélice propulsive, $TAS$ correspond à la vitesse air, $TAS^*$ correspond à la consigne de vitesse air, $kp_1$ et $ki_1$ à des paramètres constants de régulation prédéterminés par modélisation.

A forte puissance consommée, les ordres corrigés de pilotage sont générés par les moyens de commande à partir des ordres de pilotage, qui sont corrigés selon une première loi prenant en compte une puissance consommée de consigne. La puissance consommée de consigne est une puissance consommée théorique, qui correspond à ladite consigne de vitesse air issue de l'ordre de pilotage, et plus particulièrement indifféremment en dit mode direct ou en dit mode régulé de fonctionnement des moyens de commande.

A basse puissance consommée, les ordres corrigés de pilotage sont générés par les moyens de commande à partir des ordres de pilotage qui sont corrigés selon une deuxième loi prenant en compte la consigne de vitesse air issue de l'ordre de pilotage. La consigne de vitesse air est directement exploitée par les moyens de commande, pour en cas de besoin corriger les ordres de pilotage selon le processus correctif et émettre des ordres de commande correspondants.

L'organe manuel de commande exploité par le pilote pour réguler la vitesse de propulsion de l'hélicoptère hybride est générateur d'une consigne de vitesse air. Cette consigne de vitesse air est exploitée par les moyens de commande pour générer les ordres corrigés de commande qui provoquent une variation de pas moyens des pales, en prenant en compte une sécurisation du fonctionnement de l'hélicoptère hybride.

Les modalités d'exploitation de la consigne de vitesse air par les moyens de commande pour corriger selon le processus correctif les ordres de pilotage, sont dissociées selon la puissance consommée de l'hélice propulsive qui est contrôlée en permanence par des moyens appropriés équipant l'hélicoptère hybride. A basse puissance consommée, la correction de l'ordre de pilotage est une correction appliquée selon la consigne de vitesse air sur laquelle est fondé l'ordre de pilotage. A forte puissance consommée, la consigne de vitesse air sur laquelle est fondé l'ordre de pilotage, est transformée par les moyens de commande en puissance consommée de consigne correspondante. Les ordres corrigés de pilotage à partir desquels sont élaborés les ordres de commande relatifs à une variation de pas des pales à opérer, sont générés par les moyens de commande à partir de la dite transformation. La correction de l'ordre de pilotage en ordre corrigé de pilotage est, à forte puissance consommée, une correction appliquée à la puissance consommée correspondante à la consigne de vitesse air sur laquelle est fondé l'ordre de pilotage. Cette correction est élaborée par les moyens de commande à forte puissance consommée pour générer les ordres de commande provoquant la variation du pas des pales de l'hélice propulsive.

Une telle dissociation d'exploitation de la consigne de vitesse air selon la puissance consommée contrôlée, procure au pilote une ergonomie et un confort de pilotage satisfaisants. L'ordre de pilotage exploité selon le processus correctif est en permanence fondé sur une consigne de vitesse air. La sécurisation du fonctionnement de l'hélicoptère hybride est optimale, l'exploitation par les moyens de commande de la consigne de vitesse air selon le processus correctif étant adaptée en fonction de la valeur de la puissance consommée qui est contrôlée en permanence. L'élaboration de la variation du pas des pales par les moyens de commande est fondée à basse puissance consommée directement sur la consigne de vitesse air issue de l'ordre de pilotage, et à forte puissance consommée sur la puissance consommée théorique correspondante à la consigne de vitesse air issue de l'ordre de pilotage.

Dans l'éventualité où la puissance consommée de consigne, qui est déduite à partir de la consigne de vitesse air générée par l'organe manuel de commande, tend à atteindre et/ou à dépasser une valeur prédéterminée de puissance maximale admise, la puissance consommée de consigne est limitée par les moyens de commande pour déduire l'ordre de commande relatif à la consigne de variation de pas des pales. La puissance maximale admise est prédéterminée selon les facultés de résistance de l'hélicoptère hybride, et notamment de la résistance de l'organe moteur et/ou de la chaîne cinématique le reliant à l'hélice propulsive. Quelle que soit la valeur de la puissance consommée de consigne déduite à partir de la consigne de vitesse air générée par l'organe manuel de commande, la puissance consommée de consigne est diminuée au-delà du seuil de puissance maximale admise pour interdire une détérioration de l'hélicoptère hybride sous l'effet d'une commande de vol inadaptée émise par le pilote.

Un quelconque mode de fonctionnement relatif à la tenue de vitesse de l'hélicoptère hybride qui est mis en oeuvre par les moyens de commande, est dans l'incapacité d'induire une variation du pas des pales de l'hélice propulsive au-delà du seuil déterminé par la puissance maximale admise au regard des facultés de résistance de l'hélicoptère hybride.

Selon diverses variantes, l'organe manuel de commande est susceptible d'être implanté sur un manche de commande ou sur un pupitre de commande équipant le giravion.

Selon une variante, l'organe manuel de commande est implanté sur un manche de commande de variation de pas cyclique des pales d'une voilure tournante que comporte le rotor principal équipant l'hélicoptère hybride. Un tel organe de commande est avantageusement à mobilité multidirectionnelle, tel qu'agencé en bouton « sapin », en curseur ou tout autre organe de commande analogue.

Selon un exemple préféré de réalisation, l'organe manuel de commande est du type connu couramment désigné par l'homme de métier « beep trim », en étant agencé en chapeau chinois ou organe manuel de commande analogue. Le « beep trim » est un organe manuel de commande susceptible d'être avantageusement implanté sur un manche de commande de variation de pas cyclique des pales d'une voilure tournante que comporte le rotor principal équipant l'hélicoptère hybride.

Selon une autre variante, l'organe manuel de commande est implanté sur un pupitre que comporte un tableau de bord équipant l'hélicoptère hybride. Un tel organe de commande est par exemple agencé en bouton tournant, tel qu'un rotacteur ou organe de commande rotatif analogue.

Il est opportun de prendre en compte le coefficient de traînée de la cellule de l'hélicoptère hybride, qui est accessoirement corrigé de la traction éventuellement procurée par le rotor principal. Une telle traction est susceptible d'être positive dans le cas d'un rotor principal propulsif, ou d'être négative dans le cas d'un autogyre pour lequel la fonction du rotor principal est limitée à la sustentation.

La puissance consommée de consigne est préférentiellement corrigée en erreur statique, en prenant en compte le coefficient de traînée de la cellule de l'hélicoptère hybride et en considérant comme neutre l'éventuelle traction procurée par le rotor principal. Le cas échéant, il est envisageable de moduler la valeur de la puissance maximale admise en fonction de paramètres supplémentaires, prenant par exemple en compte la traction éventuellement procurée par le rotor principal.

Plus particulièrement, la puissance consommée de consigne correspondante à l'ordre de commande fondé sur la consigne de vitesse air, est préalablement définie suivant une troisième loi. Selon cette troisième loi, une puissance consommée théorique est déterminée et est corrigée en erreur statique par une règle prenant en compte au moins le coefficient de traînée de la cellule de l'hélicoptère hybride.

La troisième loi est notamment fondée sur la règle suivante :

$$P^* = \tfrac{1}{2}\, \rho\, TAS^{*3}\, CxS/\eta + kp'\,(TAS-TAS^*) + ki'\int (TAS-TAS^*).dt$$

dans laquelle règle :

*) $\rho$ est la masse volumique de l'air,

*) CxS est le coefficient de traînée de la cellule de l'hélicoptère hybride, qui est le cas échéant de préférence corrigé de la traction induite par le rotor principal, par exemple sous forme d'une contribution forfaitaire, et

*) $\eta$ est le rendement de l'hélice propulsive.

La puissance consommée est évaluée en permanence quel que soit le mode de fonctionnement des moyens de commande, et par conséquent quel que soit le processus exploité. La puissance consommée est par exemple déterminée à partir de moyens de mesure implantés sur l'hélice propulsive, et/ou à partir d'un calculateur d'estimation. Un tel calculateur d'estimation est susceptible de prendre indifféremment en compte, sur le fondement des dits ordres de pilotage relatifs à une dite consigne de vitesse air, des informations relatives respectivement au pas des pales de l'hélice propulsive, à la vitesse air, à la vitesse de rotation de l'hélice propulsive, et/ou à la densité de l'air.

Le procédé de la présente invention est notamment mis en oeuvre dans le cadre d'une procédure de commande de vol comprenant divers dits modes de fonctionnement de mise en oeuvre de l'hélice propulsive, et plus particulièrement d'une procédure de commande d'une variation du pas moyen des pales qu'elle comporte. Une telle procédure de commande de vol correspond notamment à la procédure de commande de vol faisant l'objet du document FR2946315.

Plus particulièrement, la consigne de pas moyen des pales de l'hélice propulsive est générée sélectivement en processus piloté ou en processus correctif, selon les divers modes de fonctionnement suivants :

*) un mode direct, dans lequel l'ordre de commande relatif à la valeur du pas moyen des pales de l'hélice propulsive à induire, est directement issu de l'ordre de pilotage généré par l'organe manuel de commande. Le processus piloté et le processus correctif sont activés sélectivement en mode direct selon les besoins, notamment selon l'activation ou non du dit mode protégé.

*) un mode forcé, mis en oeuvre en cas d'autorotation du rotor principal, dans lequel l'ordre de commande relatif à la valeur du pas moyen des pales de l'hélice propulsive à induire, est forcé à une valeur de pas calculée par les moyens de commande. Le mode forcé est activé à partir d'un ordre de pilotage relatif à une consigne de mode forcé, qui est générée par le pilote au moyen de l'organe manuel de commande.

*) un mode régulé, dans lequel l'ordre de commande relatif à la valeur du pas moyen des pales de l'hélice propulsive à induire, est déterminé à partir d'une régulation de la puissance consommée selon une consigne de variation de poussée qui est générée par les moyens de commande. Le processus correctif est éventuellement activé selon les besoins, notamment selon l'activation ou non du dit mode protégé visant à protéger l'hélicoptère hybride.

*) un mode protégé, dans lequel l'ordre de commande relatif à la valeur du pas moyen des pales de l'hélice propulsive à induire, est issu de la mise en oeuvre de l'un quelconque du mode direct et du mode régulé. En mode protégé, L'ordre de commande la valeur du pas moyen des pales de l'hélice propulsive est corrigée par les moyens de commande conformément au processus correctif, au regard d'au moins un paramètre de régulation limitant qui est relatif à la capacité de résistance de l'hélicoptère hybride.

Pour chacun des divers modes de fonctionnement, hormis le mode forcé, un ordre de pilotage est relatif à une consigne de vitesse air. Cet ordre de pilotage est :

*) soit directement exploité par les moyens de commande en mode direct pour générer les ordres de commande,

*) soit à basse puissance consommée directement corrigé par les moyens de commande, pour générer les ordres de commande en prenant en compte les facultés de résistance de l'hélicoptère hybride.

*) soit à forte puissance consommée transformé par les moyens de commande en puissance consommée de consigne théorique correspondante à la consigne vitesse air. La puissance consommée de consigne est calculée par les moyens de commande et est exploitée par les moyens de commande pour générer les ordres de commande en prenant en compte les facultés de résistance de l'hélicoptère hybride.

Quel que soit le mode de fonctionnement de l'appareillage de commande mis en oeuvre et quelle que soit la consigne de vitesse air générée, la puissance consommée de consigne ne peut excéder la puissance maximale admise.
Le procédé de commande de la présente invention est notamment mis en oeuvre dans le cadre du mode protégé. Les dispositions et les moyens décrits par le document FR2946315 relatifs à la mise en oeuvre des divers modes de fonctionnement de la procédure de commande de vol, sont appliqués par transposition dans le cadre du procédé de commande de la présente invention. L'ergonomie et le confort de pilotage sont améliorés, tout en respectant les conditions de sécurité au regard de la résistance de l'hélicoptère hybride.
Selon une forme préférée de mise en oeuvre du procédé de la présente invention, l'ergonomie d'un appareillage de commande de vol de l'hélice propulsive équipant l'hélicoptère hybride, est confortée par des moyens d'affichage associés aux moyens de commande.
Plus particulièrement, la puissance consommée de consigne est génératrice d'un signal d'activation d'un organe d'indication visuelle progressive. Un tel organe d'indication affiche pour le pilote de l'hélicoptère hybride la puissance consommée de consigne qui est déduite par les moyens de commande et qui correspond à l'ordre de pilotage issu de la manoeuvre par le pilote de l'organe manuel de commande.
Un tel organe d'indication de la puissance consommée de consigne est de préférence associé à un organe indicateur analogue de la consigne de vitesse air générée à partir de la manoeuvre par le pilote de l'organe manuel de commande. Le pilote dispose d'une indication visuelle de la puissance consommée de consigne qu'il induit à partir de la consigne de vitesse air qu'il génère à partir de la manoeuvre de l'organe manuel de commande, en parallèle avec une indication visuelle de cette consigne de vitesse air.
Au moins l'organe d'indication de la puissance consommée, voire aussi l'organe indicateur de la vitesse air, sont susceptibles d'être intégrés à l'organe manuel de commande, tel que pour un organe manuel de commande agencé en bouton « sapin » ou en « beep trim ».
Selon une autre forme de réalisation, au moins l'organe d'indication de la puissance consommée, voire aussi l'organe indicateur de la vitesse air, sont susceptibles d'être formés à partir d'un organe d'affichage structurellement indépendant, notamment dans le cas où l'organe manuel de commande est agencé en « beep trim ».
L'organe d'indication de la puissance consommée de consigne et/ou l'organe indicateur analogue de la consigne de vitesse air, sont de préférence chacun formés d'un marqueur incorporant une échelle visuelle de variation de valeur, le marqueur étant avantageusement de couleur verte lorsque le mode de tenue de vitesse air est engagé.

## Revendications

1.  Procédé de régulation de la vitesse de propulsion d'un hélicoptère hybride comprenant au moins un rotor principal de sustentation et au moins une hélice propulsive dotée d'un ensemble de pales à pas variable, le rotor principal et l'hélice propulsive étant entraînés en rotation par au moins un organe moteur équipant l'hélicoptère hybride,

    *) le dit procédé de régulation mettant en oeuvre des moyens de commande d'élaboration d'ordres de commande relatifs à au moins une consigne de pas moyen des pales de l'hélice propulsive en fonction d'un ordre de pilotage généré par un opérateur au moyen d'au moins un organe manuel de commande et en fonction de la puissance consommée par l'hélice propulsive,
*) le dit procédé de régulation comprenant divers processus de pilotage dont :

-) un processus piloté selon lequel des ordres de pilotage d'une variation de pas des dites pales sont générés par l'organe manuel de commande, et
-) un processus correctif selon lequel des ordres corrigés de pilotage d'une variation de pas des dites pales sont générés à partir d'un ordre de pilotage qui est corrigé au regard d'au moins un paramètre de régulation limitant qui est relatif à la capacité de résistance de l'hélicoptère hybride,
**caractérisé en ce que** :
-) les ordres de pilotage sont relatifs à une consigne de vitesse air, et
-) le processus correctif est mis en oeuvre à partir de dites consignes de vitesse air selon au moins un premier mode de correction selon lequel les ordres corrigés de pilotage sont issus d'ordres de pilotage qui sont corrigés selon une première loi prenant en compte une puissance consommée de consigne correspondante à la consigne de vitesse air issue de l'ordre de pilotage.

**2.** Procédé selon la revendication 1,
**caractérisé en ce que** ladite première loi est fondée sur la règle suivante :

$$\beta_{prop} = kp_2\,(P\text{-}P^*) + ki_2 \int (P\text{-}P^*).dt$$

dans laquelle loi $\beta_{prop}$ correspond au pas moyen des pales de chaque hélice propulsive, P à la puissance consommée, $P^*$ à la puissance consommée de consigne, et $kp_2$ et $ki_2$ à des paramètres constants de régulation prédéterminés par modélisation.

**3.** Procédé selon l'une quelconque des revendications 1 et 2, **caractérisé en ce que** :

-) le premier mode de correction est mis en oeuvre à forte puissance consommée, et
-) à basse puissance consommée, le processus correctif est mis en oeuvre à partir de dites consignes de vitesse air selon au moins un deuxième mode de correction selon lequel les ordres corrigés de pilotage sont issus d'ordres de pilotage qui sont corrigés selon une deuxième loi prenant en compte ladite consigne de vitesse air issue de l'ordre de pilotage.

**4.** Procédé selon la revendication 3,
**caractérisé en ce que** ladite deuxième loi est fondée sur la règle suivante :

$$\beta_{prop} = kp_1\,(TAS\text{-}TAS^*) + ki_1 \int (TAS\text{-}TAS^*).dt$$

dans laquelle deuxième loi $\beta_{prop}$ correspond au pas moyen des pales de chaque hélice propulsive, TAS correspond à la vitesse air, $TAS^*$ correspond à la consigne de vitesse air, $kp_1$ et $ki_1$ à des paramètres constants de régulation prédéterminés par modélisation.

**5.** Procédé selon l'une quelconque des revendications 1 à 4,
**caractérisé en ce que** la puissance consommée de consigne est préalablement définie suivant une troisième loi dans laquelle une puissance consommée théorique est déterminée et est corrigée en erreur statique par une règle prenant en compte le coefficient de traînée de la cellule de l'hélicoptère hybride.

**6.** Procédé selon la revendication 5,
**caractérisé en ce que** le coefficient de traînée de la cellule de l'hélicoptère hybride est corrigé de la traction induite par le rotor principal.

**7.** Procédé selon l'une quelconque des revendications 5 et 6,
**caractérisé en ce que** la troisième loi est fondée sur la règle suivante :

$$P^* = \frac{1}{2} \rho \, TAS^{*3} \, CxS/\eta + kp' \, (TAS\text{-}TAS^*) + ki' \int (TAS\text{-}TAS^*).dt$$

dans laquelle règle $\rho$ est la masse volumique de l'air, CxS est le coefficient de traînée de la cellule de l'hélicoptère hybride, et $\eta$ est le rendement de chaque hélice propulsive.

8. Procédé selon l'une quelconque des revendications 1 à 7,
**caractérisé en ce que** la puissance consommée est déterminée à partir de moyens de mesure implantés sur l'hélice propulsive.

9. Procédé selon l'une quelconque des revendications 1 à 8, **caractérisé en ce que** la puissance consommée est déterminée à partir d'un calculateur d'estimation sur le fondement des dits ordres de pilotage relatifs à une dite consigne de vitesse air, en fonction d'informations indifféremment relatives respectivement au pas des pales de l'hélice propulsive, à la vitesse air, à la vitesse de rotation de l'hélice propulsive, et à la densité de l'air.

10. Procédé selon l'une quelconque des revendications 1 à 9,
**caractérisé en ce que** la consigne de pas moyen des pales de l'hélice propulsive est générée sélectivement en processus piloté ou en processus correctif selon les divers modes de fonctionnement suivants :

*) un mode direct, dans lequel l'ordre de commande relatif à la valeur du pas moyen des pales de l'hélice propulsive à induire, est directement issu de l'ordre de pilotage généré par l'organe manuel de commande,
*) un mode forcé mis en oeuvre en cas d'autorotation du rotor principal, dans lequel l'ordre de commande relatif à la valeur du pas moyen des pales de l'hélice propulsive à induire, est forcé à une valeur de pas calculée par les moyens de commande, à partir d'un ordre de pilotage relatif à une consigne de mode forcé qui est générée par le pilote au moyen de l'organe manuel de commande,
*) un mode régulé, dans lequel l'ordre de commande relatif à la valeur du pas moyen des pales de l'hélice propulsive est déterminé à partir d'une régulation de la puissance consommée selon une consigne de variation de poussée qui est générée par les moyens de commande,
*) un mode protégé, dans lequel l'ordre de commande relatif à la valeur du pas moyen des pales de l'hélice propulsive est issu de la mise en oeuvre de l'un quelconque du mode direct et du mode régulé, en étant corrigée par les moyens de commande conformément au processus correctif, au regard d'au moins un paramètre de régulation limitant qui est relatif à la capacité de résistance de l'hélicoptère hybride.

11. Procédé selon la revendication 10,
**caractérisé en ce que** pour chacun des divers modes de fonctionnement, hormis le mode forcé, un ordre de pilotage est relatif à une consigne de vitesse air, le dit ordre de pilotage étant :

*) soit directement exploité par les moyens de commande en mode direct pour générer les ordres de commande,
*) soit à basse puissance consommée directement corrigé par les moyens de commande, pour générer les ordres de commande en prenant en compte les facultés de résistance de l'hélicoptère hybride.
*) soit à forte puissance consommée transformé par les moyens de commande, en puissance consommée de consigne théorique correspondante, qui est exploitée par les moyens de commande pour générer les ordres de commande en prenant en compte les facultés de résistance de l'hélicoptère hybride.

12. Procédé selon l'une quelconque des revendications 1 à 11,
**caractérisé en ce que** la puissance consommée de consigne est génératrice d'un signal d'activation d'un organe d'indication visuelle progressive, qui affiche la puissance consommée de consigne correspondante à l'ordre de pilotage issu de la manoeuvre de l'organe manuel de commande.

13. Procédé selon la revendication 12,
**caractérisé en ce que** l'organe d'indication de la puissance consommée de consigne est associé à un organe indicateur de la consigne de vitesse air générée à partir de la manoeuvre de l'organe manuel de commande.

**Patentansprüche**

1. Verfahren zur Regelung der Vortriebsgeschwindigkeit eines Hybrid-Hubschraubers mit mindestens einem Auftriebs-Hauptrotor und mindestens einem Vortriebspropeller mit einer Anzahl von Blättern mit variablen Anstellwinkel, wobei der Hauptrotor und der Vortriebspropeller durch mindestens ein Antriebsorgan des Hybrid-Hubschraubers zu einer Drehbewegung angetrieben werden,

\*) wobei das Regelverfahren Steuermittel zur Ausarbeitung von Steuerbefehlen bezüglich mindestens eines Sollwerts des mittleren Anstellwinkels der Blätter des Vortriebspropellers einsetzt in Abhängigkeit von einem Steuerbefehl, der von einer Bedienungsperson mit mindestens einem manuellen Steuerorgan erzeugt wird, und in Abhängigkeit von der von dem Vortriebspropeller verbrauchten Leistung,

\*) wobei das Regelverfahren verschiedene Steuervorgänge umfasst, darunter:

-) einen gesteuerten Vorgang, gemäß dem die Steuerbefehle für eine Veränderung des Anstellwinkels der Blätter durch ein manuelles Steuerorgan erzeugt werden, und

-) einen Korrekturvorgang, gemäß dem korrigierte Steuerbefehle zur Änderung des Anstellwinkels der Blätter erzeugt werden ausgehend von einem Steuerbefehl, der bezüglich mindestens eines beschränkenden Regelparameters korrigiert wird, der sich auf die Widerstandsfähigkeit des Hybrid-Hubschraubers bezieht,

**dadurch gekennzeichnet, dass**

-) die Steuerbefehle sich auf einen Leitwert der Luftgeschwindigkeit beziehen, und

-) der Korrekturvorgang ausgeführt wird ausgehend von den Luftgeschurindigkeitsleitwerten gemäß mindestens einem ersten Korrekturmodus, bei dem die korrigierten Steuerbefehle aus den Steuerbefehlen hervorgehen, die nach einem ersten Gesetz korrigiert sind unter Berücksichtigung eines Leitwerts der verbrauchten Leistung, die dem Leitwert der Luftgeschwindigkeit entspricht, der aus dem Steuerbefehl hervorgeht.

2. Verfahren nach Anspruch 1,
**dadurch gekennzeichnet, dass** das erste Gesetz auf der folgenden Regel basiert:

$$\beta_{prop} = kp_2 \, (P\text{-}P^*) + ki_2 \int (P\text{-}P^*).dt$$

wobei in diesem Gesetz $\beta_{prop}$ dem mittleren Anstellwinkel der Blätter eines jeden Vortriebspropellers, P der verbrauchten Leistung, P' dem Leitwert der verbrauchten Leistung, und $kp_2$ und $ki_2$ konstanten Regelparametern, die durch Modellrechnungen vorbestimmt sind, entsprechen.

3. Verfahren nach einem der Ansprüche 1 und 2,
**dadurch gekennzeichnet, dass**:

-) der erste Korrekturmodus bei einem hohen Leistungsverbrauch ausgeführt wird, und

-) bei geringem Leistungsverbrauch der Korrekturvorgang ausgehend von den Luftgeschwindigkeitsleitwerten gemäß mindestens einem zweiten Korrekturmodus ausgeführt wird, gemäß dem die korrigierten Steuerbefehle aus Steuerbefehlen hervorgehen, die nach einem zweiten Gesetz korrigiert werden, das den Luftgeschwindigkeitsleitwert berücksichtigt, der aus dem Steuerbefehl hervorgeht.

4. Verfahren nach Anspruch 3,
**dadurch gekennzeichnet, dass** das zweite Gesetz auf der folgenden Regel basiert:

$$\beta_{prop} = kp_1 \, (TAS\text{-}TAS^*) + ki_1 \int (TAS\text{-}TAS^*).dt$$

wobei bei dem zweiten Gesetz $\beta_{prop}$ dem mittleren Anstellwinkel der Blätter eines jeden Vortriebspropellers, TAS der Luftgeschwindigkeit, TAS* einem Leitwert der Luftgeschwindigkeit, $kp_1$ und $ki_1$ konstanten Regelparameter, die durch Modellrechnungen vorbestimmt sind, entsprechen.

5. Verfahren nach einem der Ansprüche 1 bis 4,
**dadurch gekennzeichnet, dass** der Leitwert der verbrauchten Leistung zuvor bestimmt wird gemäß einem dritten Gesetz, indem eine theoretische verbrauchte Leistung bestimmt ist, und gemäß einem statistischen Fehler korrigiert wird durch eine Regel, die den Luftwiderstandsbeiwert des Rumpfes des Hybrid-Hubschraubers berücksichtigt.

**6.** Verfahren nach Anspruch 5,
**dadurch gekennzeichnet, dass** der Luftwiderstandsbeiwert des Rumpfes des Hybrid-Hubschraubers um die Anziehung korrigiert wird, die durch den Hauptrotor hervorgerufen wird.

**7.** Verfahren nach einem der Ansprüche 5 und 6,
**dadurch gekennzeichnet, dass** das dritte Gesetz auf der folgenden Regel basiert:

$$P^* = \tfrac{1}{2}\, \rho\, TAS^{*3}\, CxS/\eta + kp'\, (TAS\text{-}TAS^*) + ki' \int (TAS\text{-}TAS^*).dt$$

wobei in dieser Regel $\rho$ die Luftdichte, CxS der Luftwiderstandsbeiwert des Rumpfes des Hybrid-Hubschraubers und $\eta$ der Wirkungsgrad jedes Vortriebspropellers ist.

**8.** Verfahren nach einem der Ansprüche 1 bis 7,
**dadurch gekennzeichnet, dass** die verbrauchte Leistung mit Messorganen bestimmt wird, die auf dem Antriebspropeller angebracht sind.

**9.** Verfahren nach einem der Ansprüche 1 bis 8,
**dadurch gekennzeichnet, dass** die verbrauchte Leistung bestimmt wird von einem Abschätzungsrechner auf der Grundlage der Steuerbefehle bezüglich eines Luftgeschwindigkeitsleitwertes, in Abhängigkeit von Informationen jeweils bezüglich des Anstellwinkels der Blätter des Vortriebspropellers, der Luftgeschwindigkeit, der Drehgeschwindigkeit des Vortriebspropellers und der Luftdichte.

**10.** Verfahren nach einem der Ansprüche 1 bis 9,
**dadurch gekennzeichnet, dass** der Leitwert des mittleren Anstellwinkels der Blätter des Vortriebspropellers selektiv erzeugt wird in einem Steuervorgang oder einem Korrekturvorgang gemäß folgenden verschiedenen Funktionsmoden:

*) einem direkten Modus, in dem der Steuerbefehl bezüglich dem zu erzeugenden Wert des mittleren Anstellwinkels der Blätter des Vortriebspropellers direkt aus dem Steuerbefehl hervorgeht, der von dem manuellen Steuerorgan erzeugt wird,
*) einem erzwungenen Modus, der im Falle einer Autorotation des Hauptrotors ausgeführt wird, bei dem der Steuerbefehl bezüglich des zu erzeugenden Wertes des mittleren Anstellwinkels der Blätter des Vortriebspropellers auf einen von dem Steuermittel berechneten Wert des Anstellwinkels gezwungen wird ausgehend von einem Steuerbefehl bezüglich einem Leitwert des erzwungenen Modus, der von dem Piloten mittels des manuellen Steuerorgans erzeugt wird,
*) einem geregelten Modus, in dem der Steuerbefehl bezüglich des Wertes des mittleren Anstellwinkels der Blätter des Vortriebspropellers bestimmt wird ausgehend von einer Regelung der verbrauchten Leistung gemäß einem Leitwert der Änderung des Schubs, der von den Steuermitteln erzeugt wird,
*) einem geschützten Modus, in dem der Steuerbefehl bezüglich des Wertes des mittleren Anstellwinkels der Blätter des Vortriebspropellers hervorgeht aus der Durchführung eines beliebigen Modus des direkten Modus und des geregelten Modus, indem er durch die Steuermittel konform mit dem Korrekturvorgang korrigiert wird bezüglich mindestens eines begrenzenden Regelparameters, der sich auf die Widerstandsfähigkeit des Hybrid-Hubschraubers bezieht.

**11.** Verfahren nach Anspruch 10,
**dadurch gekennzeichnet, dass** für jeden der verschiedenen Betriebsmoden, bis auf den erzwungenen Modus, ein Steuerbefehl sich auf einen Leitwert der Luftgeschwindigkeit bezieht, wobei der Steuerbefehl:

*) entweder von den Steuermitteln in einem direkten Modus genutzt wird, um die Steuerbefehle zu erzeugen,
*) oder bei niedriger verbrauchter Leistung direkt von den Steuermitteln korrigiert wird, um Steuerbefehle zu erzeugen unter Berücksichtigung der Widerstandsfähigkeiten des Hybrid-Hubschraubers,
*) oder bei hoher verbrauchter Leistung durch die Steuermittel umgewandelt wird in einen entsprechenden theoretischen Leitwert der verbrauchten Leistung, der von den Steuermitteln genutzt wird, um Steuerbefehle zu erzeugen unter Berücksichtigung der Widerstandsfähigkeiten des Hybrid-Hubschraubers.

**12.** Verfahren nach einem der Ansprüche 1 bis 11,

**dadurch gekennzeichnet, dass** der Leitwert der verbrauchten Leistung ein Aktivierungssignal eines progressiven visuellen Anzeigeorgans erzeugt, das den Leitwert der verbrauchten Leistung anzeigt, der dem Steuerbefehl entspricht, der aus einer Betätigung des manuellen Steuerorgans hervorgeht.

**13.** Verfahren nach Anspruch 12,
**dadurch gekennzeichnet, dass** das Organ zur Anzeige des Leitwerts der verbrauchten Energie mit einem Organ zur Anzeige des Leitwerts der Luftgeschwindigkeit verbunden ist, der ausgehend von einer Betätigung des manuellen Steuerorgans erzeugt wird.

**Claims**

**1.** Method of regulating the propulsion speed of a hybrid helicopter comprising at least one main lift rotor and at least one propulsive propeller provided with a set of variable-pitch blades, the main rotor and the propulsive propeller being driven in rotation by at least one engine unit with which the hybrid helicopter is equipped,

> *) said regulating method implementing control means that work out control orders relating to at least one mean pitch setpoint of the blades of the propulsive propeller as a function of a piloting order generated by an operator by means of at least one manual control member and as a function of the power consumed by the propulsive propeller,
> *) said regulating method comprising various piloting processes, including:
>
> > -) a piloted process whereby piloting orders for varying the pitch of said blades are generated by the manual control member, and
> > -) a corrective process whereby corrected piloting orders for varying the pitch of said blades are generated on the basis of a piloting order that is corrected with reference to at least one limiting regulation parameter that relates to the resistance capacity of the hybrid helicopter,
> > **characterised in that**:
> > -) the piloting orders relate to an airspeed setpoint, and
> > -) the corrective process is implemented on the basis of said airspeed setpoints in accordance with at least one first correction mode in which the corrected piloting orders are derived from piloting orders that are corrected in accordance with a first law taking account of a setpoint consumed power corresponding to the airspeed setpoint derived from the piloting order.

**2.** Method according to claim 1,
**characterised in that** said first law is based on the following rule:

$$\beta_{prop} = kp_2(P-P^*) + ki_2 \int (P-P^*).dt$$

in which law $\beta_{prop}$ corresponds to the mean pitch of the blades of each propulsive propeller, P to the consumed power, P* to the setpoint consumed power, and $kp_2$ and $ki_2$ to constant regulation parameters predetermined by modelling.

**3.** Method according to any one of claims 1 and 2,
**characterised in that**:

> -) the first correction mode is implemented at high consumed power, and
> -) at low consumed power, the corrective process is implemented on the basis of said airspeed setpoints in accordance with at least one second correction mode in which the corrected piloting orders are derived from piloting orders that are corrected in accordance with a second law taking account of said airspeed setpoint derived from the piloting order.

**4.** Method according to claim 3,
**characterised in that** said second law is based on the following rule:

$$\beta_{prop} = kp_1 (TAS-TAS^*) + ki_1 \int (TAS-TAS^*).dt$$

in which second law $\beta_{prop}$ corresponds to the mean pitch of the blades of each propulsive propeller, TAS corresponds to the airspeed, TAS* corresponds to the airspeed setpoint, $kp_1$ and $ki_1$ to constant regulation parameters predetermined by modelling.

**5.** Method according to any one of claims 1 to 4,
**characterised in that** the setpoint consumed power is defined beforehand in accordance with a third law in which a theoretical consumed power is determined and is corrected for static error by a rule taking account of the drag coefficient of the airframe of the hybrid helicopter.

**6.** Method according to claim 5,
**characterised in that** the drag coefficient of the airframe of the hybrid helicopter is corrected for the traction induced by the main rotor.

**7.** Method according to any one of claims 5 and 6,
**characterised in that** the third law is based on the following rule:

$$P^* = \tfrac{1}{2} \rho\ TAS^{*3}\ CxS/\eta + kp'(TAS-TAS^*) + ki'\ \int (TAS-TAS^*).dt$$

in which rule $\rho$ is the density of the air, CxS is the drag coefficient of the airframe of the hybrid helicopter, and $\eta$ is the efficiency of each propulsive propeller.

**8.** Method according to any one of claims 1 to 7,
**characterised in that** the consumed power is determined by measurement means installed on the propulsive propeller.

**9.** Method according to any one of claims 1 to 8,
**characterised in that** the consumed power is determined by an estimation calculator on the basis of said piloting orders relating to a said airspeed setpoint, as a function equally well of information relating respectively to the pitch of the blades of the propulsive propeller, to the airspeed, to the speed of rotation of the propulsive propeller, and to the density of the air.

**10.** Method according to any one of claims 1 to 9,
**characterised in that** the mean pitch setpoint of the blades of the propulsive propeller is generated selectively in the piloted process or in the corrective process in accordance with the various following modes of operation:

*) a direct mode, in which the control order relating to the value of the mean pitch of the blades of the propulsive propeller to be induced, is derived directly from the piloting order generated by the manual control member,
*) a forced mode implemented in the event of autorotation of the main rotor, in which the control order relating to the value of the mean pitch of the blades of the propulsive propeller to be induced, is forced to a pitch value calculated by the control means on the basis of a piloting order relating to a forced mode setpoint that is generated by the pilot by means of the manual control member,
*) a regulated mode, in which the control order relating to the value of the mean pitch of the blades of the propulsive propeller is determined on the basis of a regulation of the consumed power in accordance with a thrust variation setpoint that is generated by the control means,
*) a protected mode, in which the control order relating to the value of the mean pitch of the blades of the propulsive propeller is derived from the implementation of either one of the direct mode and the regulated mode, while being corrected by the control means in compliance with the corrective process, with respect to at least one limiting regulation parameter that relates to the resistance capacity of the hybrid helicopter.

**11.** Method according to claim 10,
**characterised in that** for each of the various modes of operation other than the forced mode, a piloting order relates to an airspeed setpoint, said piloting order being:

*) either directly used by the control means in direct mode in order to generate the control orders,

*) or, at low consumed power, directly corrected by the control means, in order to generate the control orders while taking account of the resistance capabilities of the hybrid helicopter,

*) or, at high consumed power, transformed by the control means into a corresponding theoretical setpoint consumed power that is used by the control means in order to generate the control orders while taking account of the resistance capabilities of the hybrid helicopter.

12. Method according to any one of claims 1 to 11,
**characterised in that** the setpoint consumed power generates a signal for activating a progressive visual indicating member that displays the setpoint consumed power corresponding to the piloting order derived from the operating of the manual control member.

13. Method according to claim 12,
**characterised in that** the member for indicating the setpoint consumed power is associated with a member for indicating the airspeed setpoint generated from the operating of the manual control member.

**RÉFÉRENCES CITÉES DANS LA DESCRIPTION**

**Documents brevets cités dans la description**

- FR 2946315